(19) Europäisches Patentamt
European Patent Office
Office européen des brevets

(11) **EP 0 645 935 B1**

(12) **EUROPEAN PATENT SPECIFICATION**

(45) Date of publication and mention
of the grant of the patent:
**28.07.1999 Bulletin 1999/30**

(51) Int Cl.⁶: **H04N 9/78**

(21) Application number: **94306984.9**

(22) Date of filing: **23.09.1994**

(54) **Video signal processing device**

Einrichtung zur Videosignalverarbeitung

Dispositif de traitement de signal vidéo

(84) Designated Contracting States:
**AT BE CH DE DK ES FR GB IE IT LI NL PT SE**

(30) Priority: **24.09.1993 GB 9319725**

(43) Date of publication of application:
**29.03.1995 Bulletin 1995/13**

(73) Proprietor: **SNELL & WILCOX LIMITED**
**Twickenham, Middlesex TW1 1RQ (GB)**

(72) Inventors:
• **Steinberg, Avigdor**
**Petersfield, Hampshire GU32 3LS (GB)**

• **Somerville, Stuart**
**Rowlands Castle, Hampshire PO9 6HD (GB)**

(74) Representative: **Garratt, Peter Douglas et al**
**Mathys & Squire**
**100 Grays Inn Road**
**London WC1X 8AL (GB)**

(56) References cited:
**EP-A- 0 368 013          GB-A- 2 067 872**
**US-A- 4 803 547**

## Description

This invention relates to video signal processing and is particularly concerned with the separation of luminance and chrominance information in a PAL colour television signal. The invention has application both in encoding and decoding of PAL signals.

There is a well-known technique for separating the luminance component of a PAL signal which utilises two cascaded delays each of approximately one video line. Such a technique is disclosed in GB-A-2 018 087 (see in particular fig. 1, which essentially corresponds to fig. 1 of the present description). The input signal and the output from the second delay are summed. Because of the relation between the PAL colour sub-carrier frequency and the line frequency, the phase difference between the input signal and the signal delayed by two lines is approximately 180° so that, in the absence of vertical chrominance detail, the chrominance components cancel in the summing leaving a double amplitude signal consisting substantially of luminance only. This signal can be reduced to unity gain and subtracted from the composite signal at the output of the first delay, to produce a separated chrominance signal. This separated chrominance signal is band pass filtered to the required horizontal chrominance band width and passed to a chrominance channel for further processing. The band pass chrominance signal is subtracted from the component signal at the first delay line output to feed a luminance channel.

It is a disadvantage of this known comb filter decoder that fine diagonal luminance information is inverted. This leads to the suppression of luminance in the transition band of the band pass filter and to double amplitude cross colour in the chrominance channel.

It is an object of this invention to provide improved video signal processing which overcomes or reduces the problems arising from fine diagonal luminance.

Accordingly, the present invention consists in video signal processing means for use in the separation of luminance and chrominance information in a PAL colour television signal, comprising a comb filter for receiving a PAL input signal and having a cosine frequency response with nulls at vertical spatial frequencies corresponding respectively with U & V chrominance signals and means for mixing the input signal and the comb filter response signal in appropriate phase relationship and generating an output signal; characterised in that said means for mixing signals is adapted to add within the band of spatial frequencies between said frequency response nulls and to subtract outside said band.

Advantageously, said means for mixing comprises a look-up table receiving the input signal I, the comb filter response Y and deriving the output signal C where:-

$$\text{If } Y \div I \gg 0 \text{ then } C = I - Y$$

$$\text{If } Y \div I \ll 0 \text{ then } C = I + Y$$

$$\text{If } Y \div 1 \approx 0 \text{ then } C = I$$

$$\text{If } \left| \frac{Y}{I} \right| > 1 \text{ then } C = 0$$

the Y and C signals representing the luminance and chrominance information, respectively, of the PAL input signal I.

The invention will now be described by way of example with reference to the accompanying drawings in which:-

Figure 1 is a block diagram of a known PAL colour television signal decoder;
Figure 2 is a graph showing a luminance response of the decoder at vertical frequencies calibrated in cycles per picture height;
Figure 3 is a graph in the same form showing a chrominance response;
Figure 4 is a block diagram of a PAL colour television signal decoder according to the present invention;
Figure 5 is a graph showing a chrominance response of the decoder of Figure 4; and
Figure 6 is a graph similar to Figure 5 illustrating a luminance response.

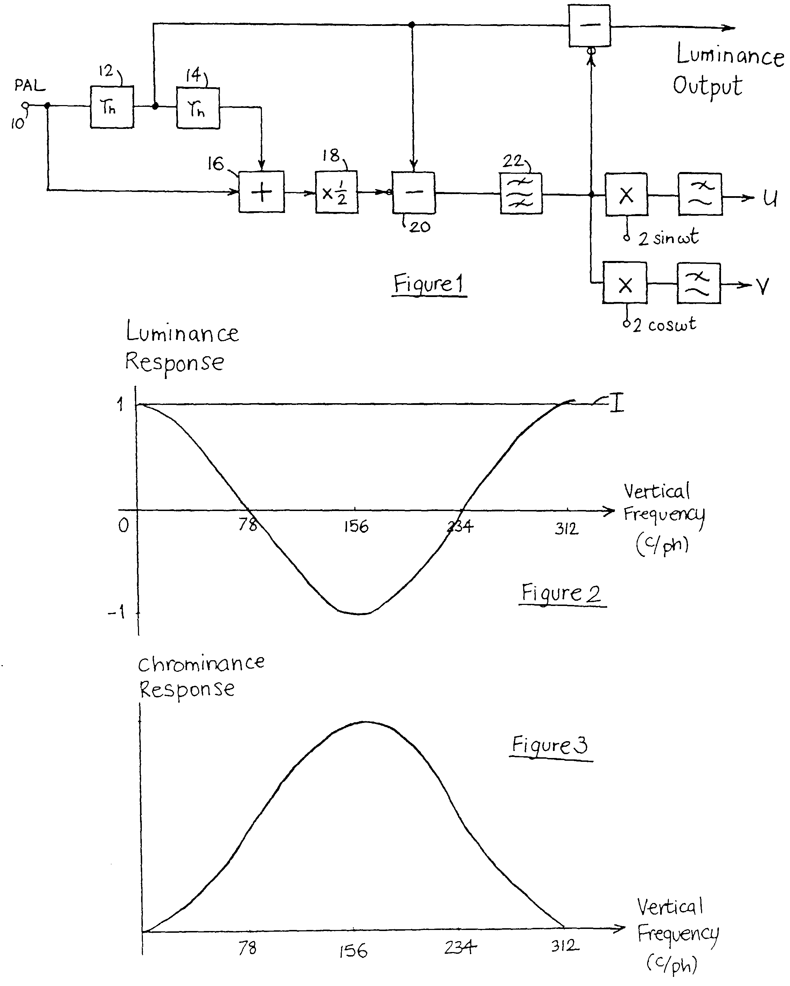

The PAL decoder shown in Figure 1 is well-known as the two-line cosine "Clarke" comb filter decoder. A composite PAL signal is taken at input terminal 10 through two cascaded delays 12 and 14, each of approximately one line length. An adder 16 receives the composite signal direct from input terminal 10 and the delayed signal from the second delay 14. The output from the adder 16 is taken through a "divide by two" attenuator 18 to the inverting input of a subtractor 20. This subtractor also receives a composite signal from the output of the first delay line 12. The output of the subtractor 20 is taken through band pass filter 22 to a chrominance channel which may, for example, include UV demodulation as shown. The output of the band pass filter 22 is also taken to the inverting input of a further subtracter 24 receiving also the composite signal output from delay 12. This subtraction of the chrominance signal from the composite signal feeds the luminance channel Y.

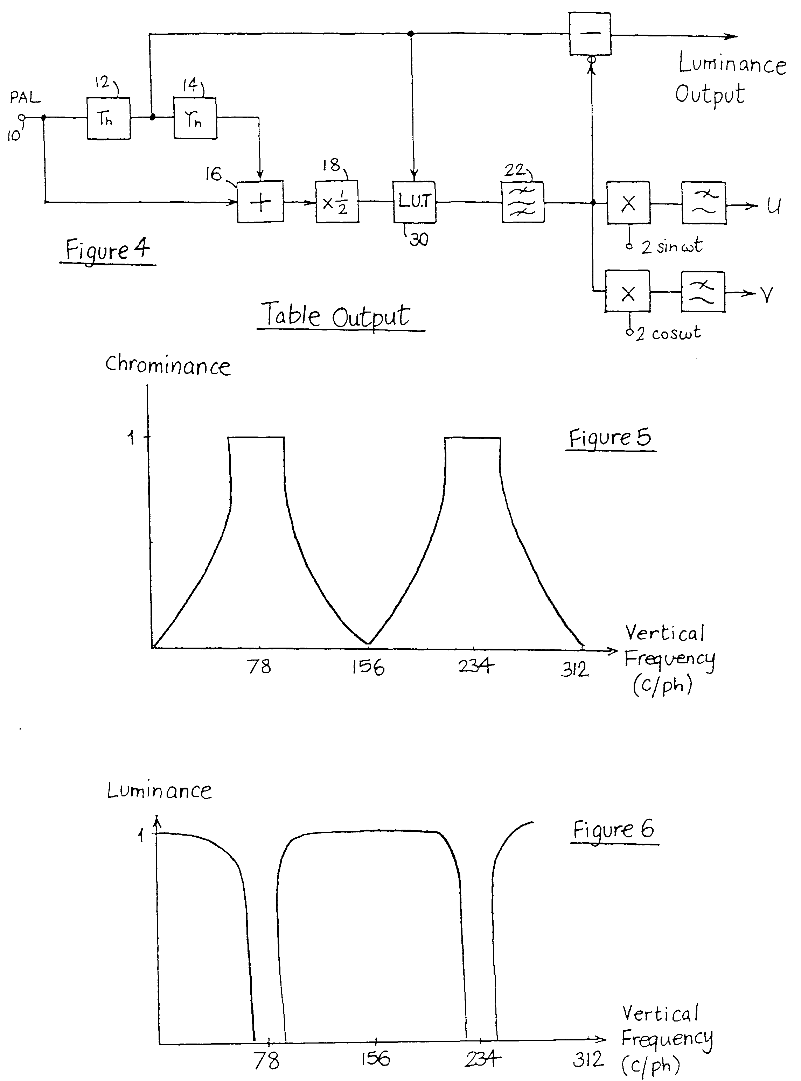

In the decoder, frequency components within the pass band of the band pass filter 22 are divided between the luminance and chrominance channel according to their vertical frequency in the manner which is illustrated by Figures 2 and 3. It will be seen that the luminance response has two nulls in its characteristic corresponding to the U and V chrominance spatial frequencies of 78 cycles per picture height (c/ph) and 234 c/ph respectively. The frequencies between these two values appear inverted in the luminance output and at greater than unity gain at the chrominance outputs. The decoder accordingly suffers the disadvantage that above the transition band of the band pass filter, the luminance vertical frequency response is changed from a flat characteristic to the characteristic shown in Figure 2. Vertical frequency components between 78 c/ph and 234 c/ph having horizontal frequencies within the transition band (fine diagonals) suffer cancellation with a loss of luminance resolution. A further disadvantage, as shown in Figure 3, is that vertical frequencies around 156 cycles per picture height give rise to double amplitude cross-colour.

The present invention addresses these problems by modifying the way in which composite and combed signals are combined to produce luminance and chrominance outputs. The simplicity of the known decoder is essentially maintained.

Turning to Figure 4, there is shown a PAL decoder according to the present invention. In this figure, components which are common with the prior art decoder of Figure 1 have been given the same reference numerals.

It will be seen that in the decoder according to this invention, the subtractor 20 has been replaced by a look-up table 30. The output from the look-up table 30 can be described by reference to the combed and attenuated signal Y from attenuator 18 and the composite signal I from the output of delay 12. The parameter $Y \div I$ is derived and four cases can be considered.

If the magnitude of $Y \div I$ is positive, the look-up table is adapted to produce the output (I - Y). This corresponds to areas of either low or very high vertical frequency which can be identified with confidence as luminance. The straightforward subtraction produces an output from the look-up table of relatively low amplitude, (as in the prior art).

If the magnitude of $Y \div I$ is negative, the look-up table is adapted to produce an output (I + Y). This occurs in areas of mid-band vertical frequency corresponding to fine diagonal luminance which would have been inverted (and some of which would be cancelled) in the luminance output of the prior art decoder and appeared as double amplitude cross-colour in the chrominance channel. Again, the look-up table output is of relatively low amplitude.

If the magnitude of $Y \div I$ is near to zero, the look-up table is adapted to produce the output I. This occurs in chrominance areas and the look-up table output is accordingly at full amplitude.

The parameter $Y \div I$ will normally lie in the range -1 to 1, thus the value of the output outside this range is of lesser importance, therefore any smooth function should suffice. If the magnitude of $Y \div I$ is great-

er than unity an output of zero is satisfactory.

Set up in this way, the look-up table produces an output having a vertical frequency response as shown in Figure 5. It will be seen that, as is required, there is unity gain response around the vertical frequencies of 78 c/ph and 234 c/ph corresponding to the U & V chrominance signals. Between these frequencies, there is a stop band centred on the frequency of 156 c/ph at which the known decoder produces double amplitude cross-colour.

The luminance output of the decoder according to this invention, produced through the subtraction of the band pass filtered chrominance output from the look-up table 30, is illustrated in Figure 6. It will be observed that the loss of luminance information is restricted, so far as is practical, to the twin chrominance frequencies, there being essentially no loss of resolution in the band between the two chrominance signals.

It will be understood that this invention can be practised in ways other than that specifically described with reference to Figure 4. In one modification, for example, the function of attenuator 18 is absorbed within the look-up table 30. In another example, the line length delays can be replaced by delays of 313 or 625 lines. In a further example, the described circuit can be placed in a signal path preceded by a band pass filter and therefore handling only chrominance and high frequency luminance. The band pass filter 22 will then not be necessary. The chrominance signal from this path, possibly after still further processing outside the scope of this information, is then subtracted from a parallel signal path containing full luminance information.

The present invention is also applicable to the encoding of PAL signals. Particularly, in a luminance pre-filter which is intended to remove, before encoding, those luminance components which are likely to give rise to cross-colour, the method of the present invention will enable the loss of luminance resolution to be confined to two narrow bands at the respective U & V chrominance frequencies rather than a relatively large band covering both frequencies. A chrominance pre-filter using the invention will remove high chrominance vertical frequencies which cause cross-luminance.

## Claims

1. Video signal processing means for use in the separation of luminance and chrominance information in a PAL colour television input signal, comprising a comb filter (12-18) for receiving a PAL input signal and having a cosine frequency response with nulls at vertical spatial frequencies corresponding respectively with U & V chrominance signals and means for mixing the input signal and the comb filter response signal in appropriate phase relationship and generating an output signal, characterised in that said means for mixing (30) signals is adapted to add within the band of spatial frequencies between said frequency response nulls and to subtract outside said band.

2. Video signal processing means according to Claim 1, wherein said means for mixing comprises a look-up table receiving the input signal I, the comb filter response Y and deriving the output signal C where:-

$$\text{If } Y \div I \gg 0 \text{ then } C = I - Y$$

$$\text{If } Y \div 1 \ll 0 \text{ then } C = I + Y$$

$$\text{If } Y \div I \approx 0 \text{ then } C = I$$

the Y and C signals representing the luminance and the chrominance information, respectively, of the PAL input signal.

3. Video signal processing means according to Claim 2, wherein the look-up table is further adapted such that:-

$$\text{If } \left|\frac{Y}{I}\right| > 1 \text{ then } C = 0$$

## Patentansprüche

1. Video- bzw. Bildsignalverarbeitungseinrichtung zur Verwendung bei der Trennung von Luminanz- und Chrominanzinformation in einem PAL-Farbfernseheingangssignal, welche einen Kammfilter (12-18) zum Empfangen eines PAL-Eingangssignals umfaßt und einen Kosinus-Frequenzgang mit Nulldurchgängen bei Vertikal-Raumfrequenzen aufweist, die jeweils U- und V-Chrominanzsignalen entsprechen, sowie eine Einrichtung zum Mischen des Eingangssignals und des Antwortsignals des Kammfilters unter einer geeigneten Phasenbeziehung und zum Erzeugen eines Ausgangssignals; dadurch gekennzeichnet, daß die Einrichtung zum Mischen (30) von Signalen ausgelegt ist, um innerhalb des Bandes aus Raumfrequenzen zwischen den Nulldurchgängen des Frequenzgangs zu addieren und außerhalb dieses Bandes zu subtrahieren.

2. Video- bzw. Bildsignalverarbeitungseinrichtung nach Anspruch 1, bei der die Einrichtung zum Mischen eine Nachschlagetabelle umfaßt, die das Eingangssignal I und die Antwort Y des Kammfilters empfängt und das Ausgangssignal C ableitet, wobei:

$$\text{falls } Y \div I \gg 0, \text{ dann } C = I = Y$$

$$\text{falls } Y \div I \ll 0, \text{ dann } C = I + Y$$

$$\text{falls } Y - 1 \approx 0, \text{ dann } C = I \text{ gilt,}$$

wobei die Y- und C-Signale die Luminanz- bzw. die Chrominanzinformation des PAL-Eingangssignals darstellen.

3. Video- bzw. Bildsignalverarbeitungseinrichtung nach Anspruch 2, bei der die Nachschlagetabelle außerdem ausgelegt ist, so daß

$$\text{falls } \left|\frac{Y}{I}\right| > 1, \text{ dann } C = 0 \text{ gilt.}$$

## Revendications

1. Moyens de traitement de signaux vidéo destinés à l'utilisation dans la séparation des informations de luminance et de chrominance dans un signal d'entrée de télévision couleur PAL comprenant un filtre peigne (12618) pour recevoir un signal d'entrée PAL et avec une réponse de fréquence cosinus avec des zéros aux fréquences spatiales verticales correspondant respectivement aux signaux U et V de chrominance et des moyens pour mélanger le signal d'entrée et le signal de réponse filtre peigne dans une relation de phase appropriée et pour générer un signal de sortie, caractérisé en ce que le moyen pour mélanger (30) les signaux est apte à ajouter à l'intérieur de la bande des fréquences spatiales entre la réponse de fréquence des zéros et à soustraire à l'extérieur cette bande.

2. Moyens de traitement de signaux vidéo selon la revendication 1, dans lesquels les moyens pour mélanger comprennent un tableau de consultation recevant le signal d'entrée (1), la réponse de filtre peigne Y et dérivant le signal de sortie C où :

$$\text{si } Y \div I \gg 0 \text{ on a alors } C = I - Y$$

$$\text{si } Y \div I \ll 0 \text{ on a alors } C = I + Y$$

$$\text{si } Y \div I \approx 0 \text{ on a alors } C = I$$

Les signaux Y et C représentent des informations de luminance et de chrominance respectivement du signal d'entrée PAL

3. Moyens de traitement de signaux vidéo selon la revendication 2, dans lesquels les tableaux de consultation sont de plus adaptés de telle sorte que :

$$\text{si } \left|\frac{Y}{I}\right| > 1 \text{ on a alors } C = 0$$

Figure 1

Figure 2

Figure 3

Figure 4

Table Output

Figure 5

Figure 6